# EUROPEAN PATENT SPECIFICATION

(11) **EP 3 895 882 B1**
(45) Date of publication and mention of the grant of the patent: **21.02.2024**
(21) Application number: 19894495.1
(22) Date of filing: 13.12.2019
(51) Int. Cl.: B29D 30/30, B60C 9/00, B60C 15/04, B60C 15/06, B29D 30/48

(54) **PNEUMATIC TIRE**
LUFTREIFEN
PNEUMATIQUE

(30) Priority: 13.12.2018 JP 2018233923
(43) Date of publication of application: 20.10.2021
(73) Proprietor: BRIDGESTONE CORPORATION, Chuo-ku Tokyo 104-8340 (JP)
(72) Inventor: OHSAWA, Yasuo, Tokyo 104-8340 (JP); YOSHIMI, Takuya, Tokyo 104-8340 (JP)
(74) Representative: Marks & Clerk LLP
(86) International application number: PCT/JP2019/049039
(87) International publication number: WO 2020/122251

(56) References cited:
- EP-A1- 1 237 738
- JP-A- 2000 198 331
- JP-A- 2004 058 807
- JP-A- 2012 162 204
- JP-A- 2013 001 206
- JP-A- 2013 001 206
- JP-A- 2013 052 720
- JP-A- 2013 052 720
- JP-A- 2015 131 523

## Description

### TECHNICAL FIELD

The present invention relates to a pneumatic tire, and more specifically, to a pneumatic tire that achieves both ride comfort and steering stability at a high level.

### BACKGROUND ART

In the structure of pneumatic tires, there is often a conflict between improving ride comfort and improving steering stability, and research and development are being conducted to find a balance between ride comfort and steering stability. There is a pneumatic radial tire in which a reinforcing layer composed of fiber cords or steel cords is arranged around the entire circumference of the tire from a bead portion to a sidewall portion, and the cord angle of the reinforcing layer is almost perpendicular to a carcass cord of a carcass layer (Patent Document 1). There is a pneumatic radial tire in which a bead reinforcing layer is divided into two layers, inner and outer, and the circumferential ply rigidity of the outer layer near the center of a sidewall is larger than that of the inner layer near a bead core (Patent Document 2).

### RELATED ART DOCUMENTS

### PATENT DOCUMENTS

[Patent Document 1] JPS62-29403A
[Patent Document 2] JP2004-58807A
[Patent Document 3] JP2013-001206A

### SUMMARY OF THE INVENTION

### PROBLEMS TO BE SOLVED BY THE INVENTION

However, both of the pneumatic radial tires described in Patent Document 1 and Patent Document 2 have an excessively strong elongation constraint against an input to cords of a bead reinforcement layer caused by bending deformation of a sidewall portion during straight running, resulting in a high vertical spring coefficient of the tire, which deteriorates the ride comfort.

Accordingly, an object of the present invention is to provide a pneumatic tire that achieves both ride comfort and steering stability at a high level.

### MEANS FOR SOLVING THE PROBLEMS

The pneumatic tire of the present invention is a pneumatic tire according to independent claim 1.

In such a pneumatic tire, the maximum width of a bead core is smaller than values obtained in relation to the bead core height, allowing the size of a bead filler to be reduced and the weight of the tire to be reduced. Reinforcement using a cord with low elastic modulus in a low-strain region at or below an inflection point and high elastic modulus in a high-strain region above the inflection point suppresses an increase in rigidity in a low elastic modulus region for vertical rigidity, which is related to the ride comfort, while high rigidity is obtained in a high elastic modulus region for lateral rigidity, which is related to the steering stability, thus achieving both ride comfort and steering stability at a high level.

In the pneumatic tire of the present invention, the bead core preferably has a ratio of the width of an outer portion of the core in the radial direction to the height of the core of 0.7 or less.

The cord may be composed of two or more kinds of fibers of different materials, and the fibers may be composed of organic fibers or inorganic fibers.

The cord may be arranged between the main body portion ply of the carcass and the bead filler, between the bead filler and a folding-over portion ply of the carcass, or outside the folding-over portion ply of the carcass in the tire radial direction.

Furthermore, the material of the cord preferably contains at least aramid or polyethylene terephthalate.

Still furthermore, the cord preferably has the inflection point in the range of 1 to 8% tensile strain, and the elastic modulus in the low-strain region is in the range of 10 to 90% of the elastic modulus in the high-strain region.

The method of manufacturing pneumatic tires of the present invention is a method of manufacturing the above-described pneumatic tire, wherein
one or more kinds of non-linear elastic modulus cords having a non-linear elastic modulus are prepared, the elastic moduli of the non-linear elastic modulus cords are controlled in a tire molding process by applying different tensions to the non-linear elastic modulus cords depending on the position of the cords in the tire, and non-linear elastic modulus cords of more kinds than the prepared non-linear elastic modulus cords are formed in the tire.

### EFFECTS OF THE INVENTION

According to the present invention, both ride comfort and steering stability can be achieved at a high level.

### BRIEF DESCRIPTION OF THE DRAWINGS

FIG. 1 is a cross-sectional view in the width direction of a pneumatic tire of an embodiment of the present invention.
FIG. 2A is a schematic cross-sectional view of a bead portion.
FIG. 2B is a schematic cross-sectional view of a bead portion.
FIG. 2C is a schematic cross-sectional view of a bead portion.
FIG. 2D is a schematic cross-sectional view of a bead portion.
FIG. 2E is a schematic cross-sectional view of a bead portion. FIG. 3 is a cross-sectional view in the width direction of a pneumatic tire illustrating a deformed state of the tire during straight running.
FIG. 4 is a cross-sectional view of a pneumatic tire in the width direction illustrating a deformed state of the tire during cornering.
FIG. 5 is a graph illustrating a stress-strain curve of a non-linear elastic modulus cord.
FIG. 6A is a cross-sectional view in the width direction of a pneumatic tire illustrating an example of arrangement in which non-linear elastic modulus cords are arranged between a main body portion ply of a carcass and a bead filler.
FIG. 6B is a cross-sectional view in the width direction of a pneumatic tire illustrating an example of arrangement in which non-linear elastic modulus cords are arranged between a bead filler and a folding-over portion ply of a carcass.
FIG. 6C is a cross-sectional view in the width direction of a pneumatic tire illustrating an example of arrangement in which non-linear elastic modulus cords are arranged outside a folding-over portion ply of a carcass in the tire radial direction.
FIG. 7A is a cross-sectional view of a shape of bead cores in Conventional Example and Comparative Example.
FIG. 7B is a cross-sectional view of a shape of bead cores in Comparative Examples and Examples.
FIG. 7C is a cross-sectional view of a shape of bead core in Example.

### MODE FOR CARRYING OUT THE INVENTION

Embodiments of the pneumatic tire of the present invention (hereinafter, also simply referred to as "tire") will be described in more detail using the drawings.

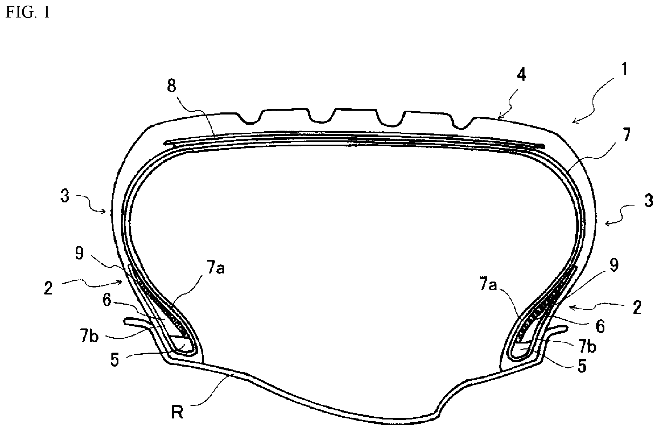

FIG. 1 illustrates a cross-sectional view in the width direction of a pneumatic tire 1 of one embodiment of the present invention in a state of being mounted on a wheel rim R. In FIG. 1, a pneumatic tire 1 includes: a pair of bead portions 2; a pair of sidewall portions 3 connected to each of the bead portions 2; and a tread portion 4 connecting the outer circumferential edges of the pair of sidewall portions 3. The bead portion 2 includes a bead core 5 composed of wound bead wires. A bead filler 6 made of hard rubber is arranged adjacent to this bead core. The pair of bead portions 2 are provided in the width direction of the pneumatic tire 1. One end of a carcass 7 is arranged to be folded over the bead core 5 and the bead filler 6 of one of the bead portions 2, and the other end of the carcass 7 is arranged to be folded over the bead core 5 and the bead filler 6 of the other bead portion 2.

The carcass 7 has a toroidal shape extending from the pair of sidewall portions 3 connected to the pair of bead portions 2 to the tread portion 4. The carcass 7 is composed of a carcass ply obtained by coating a carcass cord with rubber, and serves as a framework to maintain the shape of the pneumatic tire 1. In radial tires, the carcass cord of the carcass 7 extends in the tire radial direction.

A belt 8 composed of one or more belt plies is arranged on the outer circumferential side of the crown portion of the carcass 7.

In the pneumatic tire of the present invention, the bead core 5 has a ratio of the maximum width of the core to the height of the core of 0.8 or less in a cross-section in the tire width direction. This bead core 5 will be described in more detail.

Pneumatic tires are needed to be lighter in order to reduce the unsprung weight of automobiles, and for this purpose, bead cores and bead fillers are considered to be made smaller. The bead core is an assembly of a plurality of bead wires, and if the cross-sectional area of the bead core is simply reduced, the pressure resistance performance will be degraded, and therefore a minimum necessary cross-sectional area must be secured. When a bead filler is made thinner and smaller for a bead core with such a predetermined cross-sectional area, a tire can be made lighter. However, when a bead filler and a bead core do not connect smoothly, a main body portion and a folding-over portion of a carcass ply do not connect smoothly. Considering thinning of the bead filler or smooth connection between the bead core and the bead filler as described above, it is preferable to make the bead core shorter in the tire width direction and longer in the tire radial direction in accordance with thinning of the bead filler.

Repeated research on a preferable relationship between the maximum width of the bead core in the tire width direction and the height of the bead core in the tire radial direction revealed that the weight of the tire, including the bead filler, can be reduced when the ratio of the maximum width of the core to the height of the core is 0.8 or less.

In order for a bead core and a bead filler to be smoothly connected, it is preferable that the width of the bead filler on the inner side in the tire radial direction and the width of the bead core on the outer side in the tire radial direction opposite the inner side in the tire radial direction of the bead filler should be almost the same, and that the width of the bead core on the outer side in the tire radial direction is narrower than the maximum width of the bead core. Therefore, when the ratio of the width of an outer portion of the bead core in the radial direction to the height of the core is 0.7 or less, together with the above-described relationship of the ratio of the maximum width of the core to the height of the core is 0.8 or less, the tire weight of the tire, including the bead filler, can be reduced.

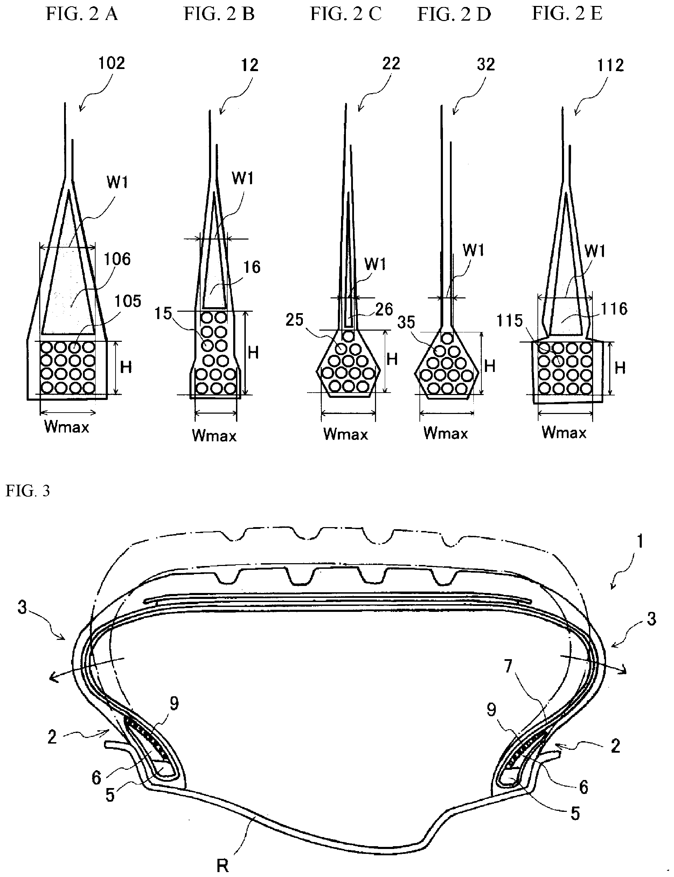

FIGS. 2A to 2E illustrate a schematic cross-sectional view of a bead portion of a pneumatic tire. FIG. 2A is an example of a bead portion 102 of a conventional pneumatic tire. A bead filler 106 is large, and a bead core 105 has a ratio of the maximum width to the height of the core of more than 0.8.

FIG. 2B is an example of a bead portion 12 of a pneumatic tire of one embodiment of the present invention. A bead filler 16 is thinner and smaller than the example of FIG. 2A, and the bead core 15 has a ratio of the maximum width of the core to the height of the core of 0.8 or less, and a ratio of the width of an outer portion of the bead core in the radial direction to the height of the core of 0.7 or less.

FIG. 2C is an example of a bead portion 22 of a pneumatic tire of another embodiment of the present invention. A bead filler 26 is thinner and smaller than the example of FIG. 2A, and the bead core 25 has a ratio of the maximum width of the core to the height of the core of 0.8 or less, and a ratio of the width of an outer portion of the bead core in the radial direction to the height of the core of 0.7 or less.

FIG. 2D is an example of a bead portion 32 of a pneumatic tire of still another embodiment of the present invention. This embodiment includes no bead filler, and the bead core 35 has a ratio of the maximum width of the core to the height of the core of 0.8 or less, and a ratio of the width of an outer portion of the bead core in the radial direction to the height of the core of 0.7 or less. As illustrated in FIG. 2D, the pneumatic tire of the present invention encompasses an embodiment that includes no bead filler. In general, a bead filler has an effect of reducing the lateral displacement of a tire and increasing the lateral spring coefficient of the tire, but in the present invention, even without a bead filler, a similar effect can be achieved by a cord with a small angle with respect to the circumferential direction in at least one part from a bead portion to a sidewall portion, as described below.

FIG. 2E is an example of a bead portion 112 of a pneumatic tire of a Comparative Example. Although a bead filler 116 is thinner and smaller than the example in FIG. 2A, a bead core 115 has a ratio of the maximum width of the core to the height of the core of more than 0.8 and a ratio of the width of an outer portion of the core in the radial direction to the height of the core of more than 0.7, and the bead filler 116 and the bead core 115 are not smoothly connected.

As understood from FIGS. 2B to 2D, the maximum width Wmax of a bead core refers to the maximum length of the bead core in the tire width direction, the height H of the bead core refers to the length of the bead core in the tire radial direction, and the width W1 of an outer portion of the bead core in the radial direction refers to the length of the outer portion of the bead core in the tire width direction.

By optimizing dimensions of a bead core and reducing the thickness of a bead filler, both the vertical spring coefficient and the lateral spring coefficient of a tire are lowered, which improves the ride comfort, but may reduce the steering stability. The pneumatic tire 1 of the present invention can address this problem with cords 9, since the cords 9 are provided in at least one part from a bead portion 2 to a sidewall portion 3. The cords 9 will be described in detail below.

As illustrated in the cross-sectional view in FIG. 1, in the pneumatic tire 1 of the present invention, the cords 9 are provided in at least one part from the bead portion 2 to the sidewall portion 3. The cords 9 are at an angle of 0 to 10° with respect to the tire circumferential direction. The cords 9 have an inflection point in a stress-strain curve, and defining the region from the origin to the inflection point of a tensile strain-stress curve as a low-strain region and the region where the tensile strain is higher than the inflection point as a high-strain region, the cords 9 have a low elastic modulus in the low-strain region at or below the inflection point and a high elastic modulus in the high-strain region above the inflection point. Such a cord with a low elastic modulus in the low-strain region at or below the inflection point and a high elastic modulus in the high-strain region above the inflection point is herein referred to as a "non-linear elastic modulus cord.

In the present embodiment illustrated in FIG. 1, when the carcass 7 is divided into a main body portion 7a and a folding-over portion 7b, the cords 9 are arranged between the main body portion 7a and the bead filler 6.

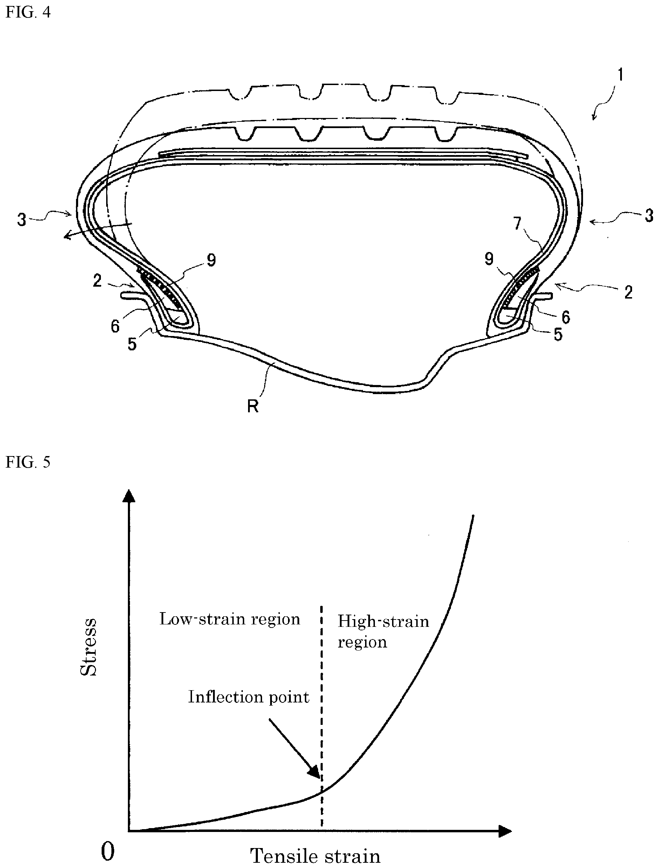

An operational advantage of the cords 9 will be described using FIGS. 3 and 4.

A deformed state of the tire 1 when loaded, viewed in a vertical cross section including the tire rotation axis, is illustrated in FIG. 3 as a cross section in the tire width direction. The deformed state illustrated in FIG. 3 is the same as the deformed state when running in a straight line.

In FIG. 3, when a load is applied to the tire 1 during straight running, each of the pair of sidewall portions 3 bulges and deforms outward in the tire width direction. At this time, as seen in a cross-section in the tire width direction in FIG. 3, a portion of the bead portion 2 that is assembled to a rim of a wheel is almost fixed, while the remaining portion is subjected to bending deformation. Such a deformation is caused by a force in the radial direction of the tire.

A deformed state of the tire 1 when loaded during cornering, viewed in a vertical cross section including the tire rotation axis, is illustrated in FIG. 4 as a cross section in the tire width direction. A bead portion 2 on the inside of the cornering deforms outward as indicated by the arrow, while the bead portion 2 on the outside of the cornering deforms less than the deformation during straight running in FIG. 1. This deformation will be described in more detail. During cornering, a lateral force is applied to the ground surface of the tire 1 from the outside to the inside of the cornering. Therefore, compared to the deformation of the tire during straight running illustrated in FIG. 3, the tire is deformed in such a manner that the outward bulging is reduced in the outer sidewall of the cornering and the outward bulging is increased in the inner sidewall of the cornering. At this time, when viewed in a cross section in the tire width direction in FIG. 4, bending deformation decreases in the bead portion 2 of the pair of bead portions 2 that is located outside cornering, and bending deformation increases in the bead portion 2 of the pair of bead portions 2 that is located inside the cornering.

An effect of the non-linear elastic modulus cord 9, which is at an angle of 0 to 10° with respect to the circumferential direction, provided in the pneumatic tire of the present embodiment on the tire deformation during straight running illustrated in FIG. 3 and the tire deformation during cornering illustrated in FIG. 4, will be described in comparison with some comparative tires.

First, a case of a comparative tire with reinforcing cords in at least one part from a bead portion to a sidewall portion at an angle greater than 10° with respect to the circumferential direction will be described.

When, as in the comparative tire, a cord with a large angle to the circumferential direction is provided in a bead portion, the cord, which has more rigidity than rubber, is strained against a force of bending deformation of the bead portion in a cross section in the tire width direction. Therefore, the cords exhibit a rigidity that suppresses tire deformation, in particular bending deformation of the bead portion. Therefore, such a comparative tire has a larger vertical spring coefficient (spring constant in the tire radial direction), or in other words, the tire has a higher vertical rigidity, which worsens the ride comfort. When the cord suppresses bending deformation of a bead portion, not only is a vertical (tire radial) deformation suppressed, but a lateral (tire width) deformation is also suppressed. Therefore, the lateral spring coefficient (spring constant in the tire width direction) of the tire is increased, in other words, the lateral rigidity is increased and the steering stability is improved.

Next, a case of a comparative tire with reinforcing cords, which are cords with a small angle with respect to the circumferential direction (from 0 to 10° with respect to the circumferential direction) but are not non-linear elastic modulus cords, provided in at least one part from a bead portion to a sidewall portion will be described.

When a cord with a small angle with respect to the circumferential direction is provided in a bead portion, as in such a comparative tire, there is no effect of the cord on a force of bending deformation of the bead portion in a cross section in the tire width direction during straight running, since rubber between the cords, which has a low elastic modulus, stretches and deforms. In response to a force of bulging deformation in a sidewall portion, a strain is applied to the cord at an angle close to the circumferential direction, which has a high elastic modulus, and this cord is difficult to stretch, and the rigidity of the tire is thus increased. Therefore, the vertical spring coefficient of such a comparative tire is not affected by the cords in the bead portion, but is affected by the cords in the sidewall portion, and the coefficient becomes larger.

A case of this comparative tire during cornering will be described. When cords with a small angle with respect to the circumferential direction are provided in at least one part from the bead portion to the sidewall portion, a force of bending deformation of the bead portion in a cross section in the tire width direction has no effect since rubber between the cords, which has a low elastic modulus, stretches and deforms. Regarding a force of bulging deformation of the sidewall portions, the portion of the sidewall portion outside the cornering where the bulging deformation is reduced among the pair of sidewall portions, is not affected by the cords since no force is applied to the cords due to the reduced bulging deformation, although the cords with an angle close to the circumferential direction, which have a high elastic modulus, are provided. In a portion of the sidewall portion inside the cornering where bulging increases, a strain is applied to the cords at an angle close to the circumferential direction, which have a high elastic modulus, and since these cords are difficult to stretch, the tire rigidity can be increased. Accordingly, the inventors' research newly found that the lateral spring coefficient of the tire increases due to the influence of the cords inside the cornering, although not influenced by the cords of the bead portion and the cords outside the cornering.

The vertical spring coefficient of a tire during straight running influences ride comfort, while the lateral spring coefficient of a tire during cornering influences steering stability. Therefore, it was found that, in order to improve the ride comfort by reducing an increase in the vertical spring of the tire during straight running, and to improve the steering stability by increasing the increase in the lateral spring coefficient during cornering, for cords with a small angle to the circumferential direction, which are provided in at least one part from a bead portion to a sidewall portion, the cord rigidity during small deformation during straight running needs to be low, and the cord rigidity during large deformation during cornering needs to be high. As a result of the inventors' research and development, they found that such cord characteristics can be achieved by using non-linear elastic modulus cords for cords provided in at least one part from a bead portion to a sidewall portion.

FIG. 5 is a graph illustrating one example of an elastic stress-strain curve of a non-linear elastic modulus cord. As illustrated in FIG. 5, the non-linear elastic modulus cord has a property that the elastic modulus, indicated by the slope of the curve in the figure, is a non-linear elastic modulus such that the elastic modulus is low in a low-strain region divided by the inflection point and high in a high-strain region.

Deformation states of a tire of the present embodiment, in which the non-linear elastic modulus cords illustrated in FIG. 5 are provided in at least one part from a bead portion to a sidewall portion at a low angle to the circumferential direction, during straight running and during cornering will be described. First, during straight running, the bead portion is subjected to bending deformation and the sidewall portion is subjected to bulging deformation, as described in FIG. 3, and in response to a force of the bulging deformation of the sidewall portion, a strain is applied to a non-linear elastic modulus cord. Since the non-linear elastic modulus cord is a cord in which the strain applied to the non-linear elastic modulus cord at this time is in a low-strain region, which is smaller than the inflection point of the curve illustrated in FIG. 5, a force is applied to the cord in a region where the elastic modulus is low. As a result, the vertical spring coefficient of the tire does not increase during straight running since the tire rigidity does not increase even when the non-linear elastic modulus cord is provided. Therefore, the ride comfort during straight running does not deteriorate.

Next, during cornering, although the bead portion is subjected to bending deformation and the sidewall portion is subjected to bulging deformation, as described using FIG. 4, a strain applied to the non-linear elastic modulus cord becomes small since deformation is smaller in the sidewall portion outside the cornering than when going straight. In the sidewall portion inside the cornering, since the non-linear elastic modulus cord is a cord in which a strain applied to the cord is in a high-strain region, which is larger than the inflection point of the curve illustrated in FIG. 5, a force is applied to the cord in a region where the elastic modulus is high. As a result, in the case of cornering, the rigidity of a tire can be increased by providing non-linear elastic modulus cords, and the lateral spring coefficient of the tire can be increased, which can improve the ground contact condition during cornering. For example, by suppressing ground surface lifting that occurs on the inner side of cornering, the ground contact area can be increased and a decrease in ground pressure on the inner side of cornering can be suppressed. Therefore, the steering stability during cornering can be improved.

The changes in the deformation state of the tire during straight running and during cornering allow the pneumatic tire of the present embodiment to achieve both ride comfort and steering stability at a high level.

As described above, in the pneumatic tire of the present embodiment, dimensions of a bead core are specified and a bead filler is small. This reduces both the vertical spring coefficient and the lateral spring coefficient of the tire. This improves the ride comfort during straight running, but may reduce the steering stability during cornering. In this regard, cords provided in at least one part from a bead portion to a sidewall portion in the tire circumferential direction can compensate for reduced size of the bead filler and improve the vertical spring coefficient and the lateral spring coefficient of the tire.

However, when the cord is not a non-linear elastic modulus cord, the cord is used always with tensile stress applied to reinforce a bead filler, and although the cord has sufficient steering stability during cornering, the vertical spring coefficient may be too high, worsening the ride comfort during straight running, or the ride comfort during straight running may be favorable, but sufficient steering stability during cornering may deteriorate. In contrast, since the cord 9 is a non-linear elastic modulus cord, the pneumatic tire of the present embodiment has a low elastic modulus property in a low-strain region, which allows the tire to have sufficient steering stability during cornering while lowering the vertical spring coefficient for favorable ride comfort during straight running. Therefore, while reducing the weight of a tire by reducing the size of a bead filler, excellent steering stability during cornering and favorable ride comfort during straight running can be obtained. By adjusting the properties of the non-linear elastic modulus of the cord, weight reduction of the tire, excellent steering stability during cornering, or favorable ride comfort during straight running can be adjusted.

Next, the non-linear elastic modulus cord of a pneumatic tire of the present embodiment will be described in more detail.

The elastic modulus of a non-linear elastic modulus cord is measured by cutting the cord out of the tire. In other words, the non-linear modulus cord is a cord that, when incorporated into an actual tire, exhibits a low elastic modulus or a high elastic modulus depending on the deformation during straight running or during cornering.

A specific method of measuring the elastic modulus is as described below. A test is conducted in the same way as the test for "Tensile Strength and Elongation" in accordance with JIS L1017, and the tensile strength and elongation are measured. From these measurement results, a curve is drawn in a graph with the tensile strain, which is the ratio of the initial length to the elongation length, and the stress on the vertical axis. In the curve of the graph with the stress on the Y-axis and the strain on the X-axis, the point where the perpendicular line passing through the intersection of the tangent line drawn on the curve when the strain is zero and the tangent line drawn on the curve at the breaking point intersects the curve is the inflection point.

This inflection point is preferably in the range of 1 to 8% tensile strain. The elastic modulus in the low-strain region is preferably in the range of 10 to 90% of the elastic modulus in the high-strain region.

It is more preferable for a cord to have a non-linearity such that the elastic modulus in the high-strain region is more than twice as large as the elastic modulus in the low-strain region. The ratio of the elastic modulus in the low-strain region to the elastic modulus in the high-strain region is represented by the ratio of the slope of the straight line connecting the strain zero to the inflection point to the slope of the straight line connecting the inflection point to the breaking point.

It is conceivable that, for the cords forming a small angle with respect to the circumferential direction, the non-linear elastic modulus cord provided in the pneumatic tire of the present embodiment is not used, and that, for example, a cord with a low rigidity is provided on the inner side in the tire radial direction, and a cord with a high rigidity is provided on the outer side in the tire radial direction. However, tires using a plurality of kinds of cords have durability issues, such as strain concentration in the rubber where the rigidity changes in the tire radial direction, or where different kinds of cords are switched, resulting in cracks during use. In contrast, in this pneumatic tire of the present embodiment, by using a cord with a non-linear elastic modulus property, the rigidity in the tire radial direction due to the non-linear modulus cord changes gradually. Therefore, strain concentration in the rubber can be avoided, and the durability can be improved.

A non-linear elastic modulus cord may be composed of two or more kinds of fibers of different materials, and the fibers may be composed of organic fibers or inorganic fibers.

In order to realize a non-linear elastic modulus cord, two or more kinds of materials with different elastic moduli, in one example, a cord with a low elastic modulus and a cord with a high elastic modulus, are used. A non-linear modulus cord formed by twisting two cords of different moduli together can exhibit low elastic modulus cord characteristics at low strain and high elastic modulus cord characteristics at high strain. As a result, a non-linear elastic modulus property can be obtained. The non-linear elastic modulus properties can be adjusted by selecting the material.

Organic fibers or inorganic fibers used for tires can be used as the material for non-linear elastic modulus cords. Examples of the organic fibers include nylon, polyethylene terephthalate, polyethylene naphthalate, and aramid. Examples of the inorganic fibers include glass fiber, carbon fiber, and steel. From these materials, materials with different elastic moduli are combined. For example, nylon, which has the lowest elastic modulus among these materials, can be selected as the material with a low elastic modulus, any of the above-described materials other than nylon can be selected as the material with a high elastic modulus, and these materials can be combined. Polyethylene terephthalate can be selected as the material with a low elastic modulus, any of polyethylene naphthalate, aramid, glass fiber, carbon fiber, or steel can be selected as the material with a high elastic modulus, and the selected materials can be combined. In addition, polyethylene naphthalate can be selected as the low elastic modulus material, any of aramid, glass fiber, carbon fiber, or steel can be selected as the material with a high elastic modulus, and the selected materials can be combined.

By using aramid as at least one of the materials for the non-linear elastic modulus cord, external damage that may occur when a foreign object hits the cord during running can be controlled by taking advantage of a favorable cut resistance that aramid has. By using polyethylene terephthalate as at least one of the materials for the non-linear modulus cord, the elastic modulus can be increased at a low cost.

Materials applied to a non-linear elastic modulus cord and materials applied to a carcass may be different. When the materials for a non-linear elastic modulus cord is the same as the materials for a main body portion ply, strain concentration occurs in the rubber sandwiched in between at the intersection of the main body portion ply and the non-linear elastic modulus cord. In contrast, by using cords with different moduli, a low elastic modulus cord is pushed by a high elastic modulus cord, and the strain can be distributed between the cords.

The angle of the non-linear elastic modulus cord with respect to the tire circumferential direction is in the range of 0 to 10°. When the absolute value of the angle with respect to the tire circumferential direction exceeds 10°, the vertical spring coefficient during straight running becomes high, and the ride comfort deteriorates.

Arrangement of the non-linear elastic modulus cord is not particularly limited, and the cord can be arranged in at least one part from the bead portion to the sidewall portion, where deformation can occur. By arranging a non-linear elastic modulus cord with an appropriate elastic modulus in an appropriate position according to the deformation state of the tire during straight running and cornering, both ride comfort and steering stability can be achieved at a high level.

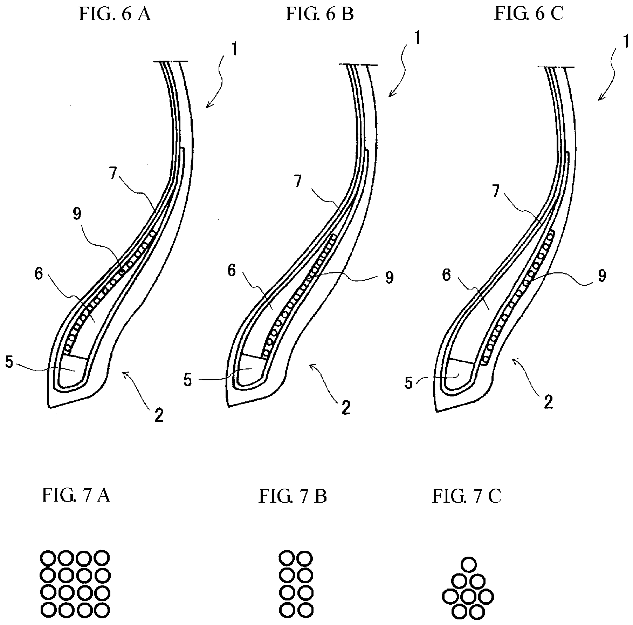

When arranged at least in a region including a bead portion, the non-linear elastic modulus cord 9 can be arranged between the main body portion ply of the carcass and the bead filler as illustrated in FIG. 6A, between the bead filler and the folding-over portion ply of the carcass as illustrated in FIG. 6B, or outside the folding-over portion ply of the carcass in the tire radial direction as illustrated in FIG. 6C.

By arranging the non-linear elastic modulus cord between the main body ply of the carcass and the bead filler as illustrated in FIG. 6A, the non-linear elastic modulus cord is arranged adjacent to the main body portion ply of the carcass, which effectively suppresses deformation of the main body portion ply that bears the internal pressure, thus effectively increasing the lateral spring coefficient of the tire. The main body portion ply generates tension when subjected to internal pressure and exhibits rigidity. Therefore, tire deformation is mainly borne by the main body portion ply, and arranging the non-linear elastic modulus cord on the adjacent outer side is effective in suppressing outward deformation of this portion.

By arranging the non-linear elastic modulus cord between the bead filler and the folding-over portion ply of the carcass, as illustrated in FIG. 6B, the bead filler receives the rigidity exhibited by the non-linear elastic modulus cord, and the lateral spring coefficient can be further increased. When the non-linear elastic modulus cord is arranged outside a bead filler to suppress deformation of the main body portion ply of the carcass, deformation of not only the main body portion ply but also the bead filler can be suppressed, and thus outward deformation of this portion can be further suppressed.

By arranging the non-linear elastic modulus cord outside the folding-over portion ply of the carcass in the tire radial direction as illustrated in FIG. 6C, the rigidity exhibited by the non-linear elastic modulus cord is received by the bead filler sandwiched between the main body portion ply and the folding-over portion ply as a whole, which greatly increases the lateral spring coefficient. The main body portion ply, the bead filler, and the folding-over portion ply work together to suppress deformation of the bead portion. When the non-linear elastic modulus cord is arranged on the outside of the folding-over portion ply, deformation of these three integrated portions can be suppressed, and therefore outward deformation of this portion can be further greatly suppressed.

A non-linear elastic modulus cord that has an appropriate elastic modulus in the tire may be prepared. The non-linear elastic modulus properties of the non-linear elastic modulus cord may be utilized to control the elastic modulus of the product by deformation during the tire manufacturing process. When tensile deformation is applied to the non-linear elastic modulus cord in the direction of the cord during the tire manufacturing process, the cord can be easily deformed by utilizing properties of low strain and low elasticity, and controlled and appropriate non-linear elastic modulus properties can be obtained inside the product tire.

The non-linear elastic modulus cord may have different non-linear elastic modulus properties within the tire, depending on where the cord is arranged in the tire. By arranging a non-linear elastic modulus cord with appropriate non-linear elastic modulus properties according to the deformation that varies depending on position in the tire, the ride comfort and the steering stability can be improved in a high balance.

A plurality of kinds of non-linear elastic modulus cords with different non-linear elastic modulus properties depending on position in the tire may be prepared before the tire molding process, however, by preparing one or more kinds of non-linear elastic modulus cords and applying different tensions to the non-linear elastic modulus cords depending on the position in the tire in the tire molding process during tire manufacturing, the elastic modulus of the non-linear elastic modulus cords can be controlled depending on the position in the product tire to obtain more kinds of non-linear elastic modulus cords in the tire than the prepared non-linear elastic modulus cords. By changing the tension of the non-linear elastic modulus cord according to the position in the tire during the manufacturing process, the elastic modulus of the cord can be changed, and therefore the elastic modulus can be changed according to the position in the tire while using the same material. Therefore, the number of kinds of materials for the non-linear elastic modulus cord to be prepared can be reduced, and the cord can be produced efficiently.

By controlling the tension applied during tire manufacturing in this way, tires with a variety of properties can be obtained. For example, in the tire molding process, the non-linear elastic modulus cord in the sidewall portion is greatly stretched in the circumferential direction because a member wound on a drum is expanded into a raw tire. Therefore, in the sidewall portion, the high-strain region of the non-linear elastic modulus cord is used, resulting in a higher rigidity than the non-linear elastic modulus cord in the bead portion. By so doing, the rigidity of the tire during cornering can be increased more effectively.

For example, the elastic modulus can be changed by the tension during manufacturing, and the non-linear elastic modulus cord in the bead portion can have a higher elastic modulus than the sidewall portion. As a result, the rigidity of the tire during cornering can be increased slightly.

For example, by expansion and tension in the tire molding process, the non-linear elastic modulus cord extending from the bead portion to the sidewall portion can also have a high elastic modulus in the center portion in the tire radial direction. As a result, the rigidity of the tire during cornering can be moderately increased.

### EXAMPLES

Data for testing using the following test method is shown in Table 1.

Passenger car tires with a tire size of 205/60R16 92V are manufactured by arranging a variety of cords of Conventional Example, Comparative Examples, and Examples shown below in a bead portion. In this case, three different types of bead core shapes illustrated in FIG. 5 are used. In Conventional Example, cords were not arranged. The main body portion ply cord is made of polyethylene terephthalate. Rim assembly is performed with an internal pressure of 210 kPa, a load of 5.73 kN, and a rim of 6J × 16. After internal pressure filling, a load of up to 6 kN is applied, the relationship between load and deflection is plotted, and the slope at a load of 5.73 kN is used as the vertical spring coefficient. With a load of 5.73 kN applied, a tire is displaced up to 10 mm in the lateral direction, the relationship between the amount of displacement and the lateral force is plotted, and the slope when the lateral displacement is 5 mm is used as the lateral spring coefficient. The estimated values of the vertical spring coefficient and the lateral spring coefficient are shown in Table 1. In Table 1, both of the spring coefficients are expressed with Conventional Example as 100.

Conventional Example: Bead core of FIG. 7A, without circumferential cord arrangement.

Comparative Example 1: Bead core of FIG. 7A, with aramid cords arranged at a circumferential angle of 45 degrees.

Comparative Example 2: Bead core of FIG. 7B, without circumferential cord arrangement.

Comparative Example 3: Bead core of FIG. 7B, with aramid cords of non-linear elastic modulus arranged at a circumferential angle of 45 degrees.

Example 1: Bead core of FIG. 7B, with a non-linear elastic modulus cord made of nylon and aramid twisted together at a circumferential angle of virtually zero degrees, arranged on the inside of a main body portion ply. The inflection point is at 2% of the tensile strain, and the elastic modulus in the low-strain region is 20% of the high-strain region elastic modulus.

Example 2: Bead core of FIG. 7B, with a non-linear elastic modulus cord made of nylon and aramid twisted together at a circumferential angle of virtually zero degrees, arranged between the bead filler and a folding-over portion ply. The inflection point is at 2% of the tensile strain, and the elastic modulus in the low-strain region is 20% of the elastic modulus in the high-strain region.

Example 3: Bead core of FIG. 7B, with a non-linear elastic modulus cord made of nylon and aramid twisted together at a circumferential angle of virtually zero degrees, arranged on the outside of a folding-over portion ply. The inflection point is at 2% of the tensile strain, and the elastic modulus in the low-strain region is 20% of the high-strain region elastic modulus.

Example 4: Bead core of FIG. 7B, with a non-linear elastic modulus cord made of nylon and polyethylene terephthalate twisted together at a circumferential angle of virtually zero degrees, arranged on the outside of a folding-over portion ply. The inflection point is at 2% of the tensile strain, and the elastic modulus in the low-strain region is 50% of the elastic modulus in the high-strain region.

Example 5: Bead core of FIG. 7C, without a bead filler, with a non-linear elastic modulus cord made of nylon and aramid twisted together at a circumferential angle of virtually zero degrees, arranged on the inside of a main body portion ply. The inflection point is at 2% of the tensile strain, and the elastic modulus in the low-strain region is 20% of the high-strain region elastic modulus.

**[Table 1]**

| | Core maximum width / height | Core upper portion width / height | Vertical spring coefficient | Lateral spring coefficient |
|---|---|---|---|---|
| Conventional Example | 1 | 1 | 100 | 100 |
| Comparative Example 1 | 1 | 1 | 110 | 110 |
| Comparative Example 2 | 0.5 | 1 | 90 | 90 |
| Comparative Example 3 | 0.5 | 1 | 102 | 110 |
| Example 1 | 0.5 | 1 | 90 | 95 |
| Example 2 | 0.5 | 1 | 90 | 98 |
| Example 3 | 0.5 | 1 | 90 | 102 |
| Example 4 | 0.5 | 1 | 90 | 95 |
| Example 5 | 0.75 | 0.25 | 95 | 100 |

As shown in Table 1, Examples 1 to 5 provide favorable ride comfort with no increase in the vertical spring coefficient compared to Conventional Example, and provide favorable steering stability with an increase in the lateral spring coefficient compared to Conventional Example. In contrast, Comparative Examples 1 and 3 provide deteriorated ride comfort with an increase in the vertical spring coefficient compared to Conventional Example.

The pneumatic tire of the present invention has been described above by way of embodiments and Examples, but the pneumatic tire of the present invention can be modified within the scope of the appended claims.

### DESCRIPTION OF SYMBOLS

1 Pneumatic tire, 2 Bead portion, 3 Sidewall portion, 4 Tread portion, 5 Bead core, 6 Bead filler, 7 Carcass, 8 Belt, 9 Cord

## Claims

1. A pneumatic tire comprising:
a pair of bead portions each containing a bead core; a pair of sidewall portions each connected to each of the pair of bead portions and extending outward in a radial direction; and a tread portion connecting the outer circumferential edges of the pair of sidewall portions; as well as
a carcass arranged in such a manner that both ends thereof are each folded over the bead core in the pair of bead portions to form a toroidal shape from the sidewall portions to the tread portion; a belt provided on the outer circumferential side of a crown portion of the carcass; the bead core provided between a main body portion and a folding-over portion of the carcass in the bead portion; and
a cord provided in at least one part from the bead portion to the sidewall portions, wherein
the cord has an inflection point in a stress-strain curve, with a low elastic modulus in a low-strain region at or below the inflection point, and a high elastic modulus in a high-strain region above the inflection point, **characterized in that**
the cord is at an angle of 0 to 10° with respect to the circumferential direction, wherein
the bead core has a ratio of the maximum width of the core to the height of the core of 0.8 or less in a cross-section in the tire width direction, and
the pneumatic tire comprises a bead filler smoothly connected with the bead core between the main body portion and the folding-over portion of the carcass in the bead portion or does not comprise a bead filler.

2. The pneumatic tire according to claim 1, wherein the bead core has a ratio of the width of an outer portion of the core in the radial direction to the height of the core of 0.7 or less.

3. The pneumatic tire according to claim 1, wherein the cord is composed of two or more kinds of fibers of different materials, wherein the fibers are composed of organic fibers or inorganic fibers.

4. The pneumatic tire according to claim 1 or 2, wherein the cord is arranged between a main body portion ply of the carcass and the bead filler.

5. The pneumatic tire according to claim 1 or 2, wherein the cord is arranged between the bead filler and a folding-over portion ply of the carcass.

6. The pneumatic tire according to claim 1 or 2, wherein the cord is arranged outside the folding-over portion ply of the carcass in the tire radial direction.

7. The pneumatic tire according to any one of claims 1 to 6, wherein the material of the cord contains at least aramid or polyethylene terephthalate.

8. The pneumatic tire according to any one of claims 1 to 7, wherein the cord has the inflection point in the range of 1 to 8% tensile strain.

9. The pneumatic tire according to any one of claims 1 to 8, wherein the cord has the elastic modulus in the low-strain region in the range of 10 to 90% of the elastic modulus in the high-strain region.

10. A method of manufacturing the pneumatic tire according to any one of claim 1 to 9, wherein
one or more kinds of non-linear elastic modulus cords having a non-linear elastic modulus are prepared, the elastic modulus of the respective non-linear elastic modulus cord is controlled in a tire molding process by applying different tensions to the non-linear elastic modulus cords depending on the position of the cords in the tire, and non-linear elastic modulus cords of more kinds than the prepared non-linear elastic modulus cords are formed in the tire.

## Patentansprüche

1. Luftreifen, der Folgendes umfasst:
ein Paar von Wulstabschnitten, die jeweils einen Wulstkern enthalten; ein Paar von Seitenwandabschnitten, die jeweils mit jedem von dem Paar von Wulstabschnitten verbunden sind und sich in einer radialen Richtung nach außen erstrecken; und einen Laufflächenabschnitt, der die äußeren Umfangskanten des Paares von Seitenwandabschnitten verbindet; sowie
eine Karkasse, die auf eine solche Weise angeordnet ist, dass beide Enden davon jeweils über den Wulstkern in dem Paar von Wulstabschnitten umgeklappt sind, um eine kreisringförmige Gestalt von den Seitenwandabschnitten bis zu dem Laufflächenabschnitt zu bilden; einen Gürtel, der auf der äußeren Umfangsseite eines Scheitelabschnitts der Karkasse bereitgestellt ist; wobei der Wulstkern zwischen einem Hauptkörperabschnitt und einem Umklappabschnitt der Karkasse in dem Wulstabschnitt bereitgestellt ist; und
einen Kord, der in mindestens einem Teil von dem Wulstabschnitt bis zu den Seitenwandabschnitten bereitgestellt ist, wobei
der Kord einen Wendepunkt in einer Spannungs-Dehnungs-Kurve aufweist, mit einem niedrigen Elastizitätsmodul in einem Bereich niedriger Dehnung bei dem Wendepunkt oder unterhalb desselben, und einem hohen Elastizitätsmodul in einem Bereich hoher Dehnung oberhalb des Wendepunktes, **dadurch gekennzeichnet, dass**
der Kord sich in einem Winkel von 0 bis 10° in Bezug auf die Umfangsrichtung befindet, wobei
der Wulstkern ein Verhältnis der maximalen Breite des Kerns zu der Höhe des Kerns von 0,8 oder weniger in einen Querschnitt in der Reifenbreitenrichtung aufweist, und
der Luftreifen einen Kernreiter, der nahtlos mit dem Wulstkern verbunden ist, zwischen dem Hauptkörperabschnitt und dem Umklappabschnitt der Karkasse in dem Wulstabschnitt umfasst oder keinen Kernreiter umfasst.

2. Luftreifen nach Anspruch 1, wobei der Wulstkern ein Verhältnis der Breite eines äußeren Abschnitts des Kerns in der radialen Richtung zu der Höhe des Kerns von 0,7 oder weniger aufweist.

3. Luftreifen nach Anspruch 1, wobei der Kord aus zwei oder mehr Arten von Fasern aus unterschiedlichen Materialien zusammengesetzt ist, wobei die Fasern aus organischen Fasern oder anorganischen Fasern zusammengesetzt sind.

4. Luftreifen nach Anspruch 1 oder 2, wobei der Kord zwischen einer Hauptkörperabschnittsschicht der Karkasse und dem Kernreiter angeordnet ist.

5. Luftreifen nach Anspruch 1 oder 2, wobei der Kord zwischen dem Kernreiter und einer Umklappabschnittsschicht der Karkasse angeordnet ist.

6. Luftreifen nach Anspruch 1 oder 2, wobei der Kord außerhalb der Umklappabschnittsschicht der Karkasse in der Reifenradialrichtung angeordnet ist.

7. Luftreifen nach einem der Ansprüche 1 bis 6, wobei das Material des Kords mindestens Aramid oder Polyethylenterephthalat enthält.

8. Luftreifen nach einem der Ansprüche 1 bis 7, wobei der Kord den Wendepunkt in dem Bereich von 1 bis 8 % Zugdehnung aufweist.

9. Luftreifen nach einem der Ansprüche 1 bis 8, wobei der Kord den Elastizitätsmodul in dem Bereich niedriger Dehnung in dem Bereich von 10 bis 90 % des Elastizitätsmoduls in dem Bereich hoher Dehnung aufweist.

10. Verfahren zum Herstellen des Luftreifens nach einem der Ansprüche 1 bis 9, wobei
eine oder mehrere Arten von Kords mit nicht-linearem Elastizitätsmodul, die einen nicht-linearen Elastizitätsmodul aufweisen, vorbereitet werden, der Elastizitätsmodul des jeweiligen Kords mit nicht-linearem Elastizitätsmodul in einem Reifenformungsprozess durch Anwenden unterschiedlicher Spannungen auf die Kords mit nicht-linearem Elastizitätsmodul in Abhängigkeit von der Position der Kords in dem Reifen gesteuert wird, und Kords mit nicht-linearem Elastizitätsmodul von mehr Arten als die vorbereiteten Kords mit nicht-linearem Elastizitätsmodul in dem Reifen geformt werden.

## Revendications

1. Bandage pneumatique comprenant :
une paire de parties de talon contenant chacune une tringle de talon ; une paire de parties de flanc reliées chacune à chacune de la paire de parties de talon et s'étendant vers l'extérieur dans une direction radiale ; et une partie de bande de roulement reliant les bords circonférentiels externes de la paire de parties de flanc ; ainsi
qu'une carcasse disposée de telle manière que les deux extrémités de celle-ci sont chacune pliées par-dessus la tringle de talon dans la paire de parties de talon pour former une forme toroïdale des parties de flanc à la partie de bande de roulement ; une courroie fournie sur le côté circonférentiel externe d'une partie de couronne de la carcasse ; la tringle de talon étant fournie entre une partie de corps principale et une partie de pliage de la carcasse dans la partie de talon ; et
un câble fourni dans au moins une partie de la partie de talon aux parties de flanc, dans lequel
le câble présente un point d'inflexion dans une courbe contrainte-déformation, avec un module d'élasticité faible dans une zone de faible déformation au niveau ou en dessous du point d'inflexion, et un module d'élasticité élevé dans une zone de forte déformation au-dessus du point d'inflexion, **caractérisé en ce que**
le câble est disposé selon un angle de 0 à 10° par rapport à la direction circonférentielle, dans lequel
la tringle de talon présente un rapport entre la largeur maximale de la tringle et la hauteur de la tringle de 0,8 ou moins dans une section transversale dans la direction de la largeur du pneu, et
le pneumatique comprend un bourrage sur tringle relié de manière homogène à la tringle de talon entre la partie de corps principale et la partie de pliage de la carcasse dans la partie de talon ou ne comprend pas de bourrage sur tringle.

2. Bandage pneumatique selon la revendication 1, dans lequel la tringle de talon présente un rapport entre la largeur d'une partie externe de la tringle dans la direction radiale et la hauteur de la tringle de 0,7 ou moins.

3. Bandage pneumatique selon la revendication 1, dans lequel le câble est composé de deux types de fibres ou plus de matériaux différents, dans lequel les fibres sont composées de fibres organiques ou de fibres inorganiques.

4. Bandage pneumatique selon la revendication 1 ou 2, dans lequel le câble est disposé entre un pli de partie de corps principale de la carcasse et le bourrage sur tringle.

5. Bandage pneumatique selon la revendication 1 ou 2, dans lequel le câble est disposé entre le bourrage sur tringle et un pli de partie de pliage de la carcasse.

6. Bandage pneumatique selon la revendication 1 ou 2, dans lequel le câble est disposé à l'extérieur du pli de partie de pliage de la carcasse dans la direction radiale de pneu.

7. Bandage pneumatique selon l'une quelconque des revendications 1 à 6, dans lequel le matériau du câble contient au moins de l'aramide ou du polyéthylène téréphtalate.

8. Bandage pneumatique selon l'une quelconque des revendications 1 à 7, dans lequel le câble présente le point d'inflexion dans la plage de 1 à 8 % de l'allongement par traction.

9. Bandage pneumatique selon l'une quelconque des revendications 1 à 8, dans lequel le câble présente le module d'élasticité dans la zone de faible déformation dans la plage de 10 à 90 % du module d'élasticité dans la zone de forte déformation.

10. Procédé de fabrication du pneumatique selon l'une quelconque des revendications 1 à 9, dans lequel
un ou plusieurs types de câbles de module d'élasticité non linéaire présentant un module d'élasticité non linéaire sont préparés, le module d'élasticité du câble de module d'élasticité non linéaire respectif est commandé dans un processus de moulage de pneu en appliquant des tensions différentes aux câbles de module d'élasticité non linéaire en fonction de la position des câbles dans le pneu, et des câbles de module d'élasticité non linéaire de plus de sortes que les câbles de module d'élasticité non linéaire préparés sont formés dans le pneu.
